# EUROPEAN PATENT SPECIFICATION

(11) **EP 2 653 038 B1**
(45) Date of publication and mention of the grant of the patent: **02.10.2019**
(21) Application number: 13163694.6
(22) Date of filing: 15.04.2013
(51) Int. Cl.: A23K 10/37, A01N 65/00, C05F 5/00, C05F 11/00, A01N 65/08, C05D 9/02, C05G 3/08

(54) **USE OF PLANT RESIDUE FROM SHEA TREE**
VERWENDUNG VON PFLANZENRESTEN VON KARITÉBAUM
UTILISATION DE RÉSIDUS VÉGÉTAUX ISSUS DU KARITÉ

(30) Priority: 16.04.2012 DK 201200064 U
(43) Date of publication of application: 23.10.2013
(73) Proprietor: OK Biotech ApS, 8250 Ega (DK)
(72) Inventor: Hansen, Ole Kaae, 8250 Egå (DK)
(74) Representative: Zacco Denmark A/S

(56) References cited:
- EP-A1- 1 517 694
- WO-A1-2005/099659
- CH-A- 422 842
- FR-A1- 2 259 072
- M.A. BELEWU ET AL: "Effects of Aspergillus niger treated Shea butter cake based diets on nutrient intake and weight gain of Red Sokoto goat", AFRICAN JOURNAL OF BIOTECHNOLOGY, vol. 7, no. 9, 2 May 2008 (2008-05-02), pages 1357-1361, XP055074189, DOI: 10.5897/AJB07.860
- H. K. DEI ET AL: "Metabolizable Energy in Different Shea Nut (Vitellaria paradoxa) Meal Samples for Broiler Chickens", POULTRY SCIENCE, vol. 87, no. 4, 1 April 2008 (2008-04-01), pages 694-699, XP055074190, ISSN: 0032-5791, DOI: 10.3382/ps.2007-00290

## Description

### Field of the invention

The present invention relates to the use of a plant residue comprising natural, active components i.e. phytochemicals. The plant residue originates from trees of the *Sapotacea* family, in particular from the fruits, especially from the nuts of the shea tree *(Butyrospermum parkii).* The plant residue is used for agricultural purposes.

### Background of the invention

It is well known that plants and plant material contains a variety of different types of active components i.e. phytochemicals. The types can be exemplified as e.g. saponins, terpenes, tannins and other polyphenols, etc. To be able to use these substances it is normally necessary to extract them and purify them before they can be used for a specific purpose. As a consequence of this processing the cost is increased leading to relative high prices for such substances. Among the saponin containing types that are produced in high volumes are the extracts of *Quillaja saponaria* and various *Yucca* species. They lower the surface tension, and the main areas of application for these extracts are as a foaming agent in soft drinks and in cosmetics.

There are various other applications and investigations in progress.

### Description of prior art

US 7,645,464 and EP 1 517 694 discloses a method for the production of a saponin containing extract from the fat-extracted butter cake of the shea butter tree as well as the use thereof.

Nothing is mentioned about the direct use of the de-oiled plant residue, except disposal by burning.

Belewu et al (2008): "Effects of Aspergillus niger treated Shea butter cake based diets on nutrient intake and weight gain of Red Sokoto goat"; African J. of Biotech., vol. 7, no. 9, pages 1357-1361; discloses a shea butter cake obtained by solvent extraction of the shea fruit and mixed with other components, suitable for use in agricultural purposes.

Dei et al (2008): "Metabolizable Energy in Different Shea Nut Meal Samples for Broiler Chickens"; Poultry Science, vol. 87, no. 4, pages 694-699; discloses a shea nut meal obtained by solvent extraction of the shea fruit and mixed with other components, suitable for use in agricultural purposes.

FR 2 259 072 A1 discloses a de-oiled shea meal, obtained after extraction, suitable for use in agricultural purposes.

CH 422 842 A discloses a de-oiled shea meal, obtained after extraction, suitable for use in agricultural purposes.

WO 2005/099659 discloses the use of a powder from Chinese gutta-percha, a tree in the *Sapotacea* family, for agricultural purposes, to remove the smell of ammonia from pet and livestock.

EP 1 517 694 discloses a plant residue from the shea tree, suitable for use in agricultural purposes.

### Definitions

### Plant residue:

Comprises de-oiled/fat-extracted and dried plant material.

The plant residue is in this context typically in the form of the by-product after solvent extraction of the fat part of the oil-bearing fruit or nut e.g. shea nut. This by-product is by the skilled person also known as meal e.g. shea meal.

### Active components:

Comprises phytochemicals contained in the fruits of the trees of the Sapotacea family.

E.g. saponins, tannins, terpenes and their derivatives, etc.

Organic and inorganic substances define such substances commonly known by the skilled person.

### Description of the invention

The present invention relates to the use of a plant residue, comprising as the active components triterpene-saponins and tannins obtained from the nuts from the fruits of the shea tree (*Butyrospermum parkii*) for agricultural purposes in the stable or in a slurry tank to reduce the emission of ammonia. It has been found that it is not necessary to extract and purify the active components from the meal, as it can be used directly and thereby reduce cost normally associated with extraction and purification.

Furthermore, it has now been found that the plant residue is well suited for agricultural purposes.

In this aspect, the plant residue is used to reduce the emission of ammonia by adding it to the litter in the stable or slurry tank. Advantageously the plant residue may be used in combination with salts or oxides of copper, aluminium, zinc and iron, e.g. ZnO, Fe₂(SO₄)₃, etc.

The amount used has to be adapted to the regulation in force for the specific application.

### Further embodiments

The plant residue is characterised in that the plant residue contains triterpene saponins and tannins obtained from the nuts from the fruits of the shea tree (*Butyrospermum parkii*). The plant residue, in one embodiment, is characterised in that the plant residue is de-oiled/fat-extracted and has been obtained by solvent extraction of the press cake in the production of shea butter.

The plant residue is characterised in that the plant residue is used for agricultural purposes in the stable and in a slurry tank.

The plant residue is characterised in that the plant residue is used to reduce the emission of ammonia.

The plant residue is characterised in that the plant residue is used to reduce the formation of ammonia in combination with salts or oxides of copper, aluminium, zinc and iron.

The plant residue can be mixed with other organic or inorganic substances.

### Examples

### Example 1 Use of a plant residue for the reduction of ammonia in agricultural applications

### 1.1 Used in stables.

Plant residue: Solvent extracted shea meal
Dose: 5-100 g plant residue per kg straw cut to 2-5 cm.
The mixture of straw and plant residue is used in stables for the reduction of formation of ammonia.

### 1.2 Used in slurry tanks.

Plant residue: Milled, solvent extracted shea meal
Dose: 100g plant residue per 40 litre slurry of pig manure
After the addition of the plant residue in the test container the slurry was mixed and the container was closed. A reference without plant residue was prepared, mixed and closed.

The emission of ammonia from the two containers was monitored during a period of eight days.

The recorded result was that after three days, there was a reduction of 16% ammonia from the test container relative to the reference. In the following days the effect was reduced, and after five days the emission of ammonia was at the same level from both containers.

The result indicates that the initial dose has to be increased and followed by time related doses to maintain the effect.

### 1.3 Used in feed products (outside the scope of invention).

Premix: A mixture of 95.0% whey powder, 3.5% of solvent extracted shea meal and 1.5% of ZnO was prepared.

Dose: 1% of the premix was added to the feed which corresponds to a fortification with 350g plant residue and 150g ZnO per metric ton of feed.

### Example 2 Use of a plant residue as wetting agent (outside the scope of invention)

Ten litre of tap water was admixed 100g of milled shea meal, and after fifteen minutes the mixture was sieved (1x1 mm) into a spray gun containing a dose of ant poison. The surface tension of the preparation was 58.6 dyn/cm. The surface tension of a reference without plant residue was 71.8 dyn/cm.

## Claims

1. Use of a plant residue comprising as the active components triterpene-saponins and tannins obtained from the nuts from the fruits of the shea tree (*Butyrospermum parkii*) for agricultural purposes in the stable or in a slurry tank to reduce the emission of ammonia.

2. Use according to claim 1, **characterised in that** the plant residue is de-oiled/fat-extracted and has been obtained by solvent extraction of the press cake in the production of shea butter.

3. Use according to claims 1-2, **characterised in that** said plant residue has been mixed with other organic or inorganic substances.

## Patentansprüche

1. Verwendung eines Pflanzenrestes umfassend als die aktiven Bestandteile Triterpen-Saponine und Tannine, die aus den Nüssen des Sheabaums (*Butyrospermum parkii*) erhalten worden sind, für landwirtschaftliche Zwecke im Stall oder in einem Gülletank zur Reduzierung der Emission von Ammoniak.

2. Verwendung nach Anspruch 1, **dadurch gekennzeichnet, dass** der Pflanzenrest entölt/abgemagert ist und durch Lösungsmittelextraktion des Presskuchens bei der Herstellung von Sheabutter erhalten worden ist.

3. Verwendung nach Anspruch 1-2, **dadurch gekennzeichnet, dass** der Pflanzenrest mit anderen organischen oder anorganischen Substanzen gemischt worden ist.

## Revendications

1. Utilisation d'un résidu de plante comprenant en tant que composants actifs des saponines triterpènes et des tanins obtenus à partir des noix des fruits du karité (*Butyrospermum parkii*) à des fins agricoles dans l'écurie ou dans un réservoir à lisier pour réduire les émissions d'ammoniac.

2. Utilisation selon la revendication 1, **caractérisée en ce que** le résidu de plante est déshuilé / extrait de graisse et a été obtenu par extraction au solvant du tourteau dans la production de beurre de karité.

3. Utilisation selon les revendications 1 à 2, **caractérisée en ce que** le résidu de plante a été mélangé avec d'autres substances organiques ou inorganiques.
